# EUROPÄISCHE PATENTANMELDUNG

(11) **EP 0 795 989 A2**
(43) Veröffentlichungstag der Anmeldung: **17.09.1997**
(21) Anmeldenummer: 97103745.2
(22) Anmeldetag: 06.03.1997
(51) Int. Cl.: H04M 1/72, H04M 19/04

(54) **Verfahren und Anordnung zum Erzeugen von Tönen in einem drahtlosen Telekommunikationssystem**

(30) Priorität: 14.03.1996 DE 19610063
(71) Anmelder: SIEMENS AKTIENGESELLSCHAFT, 80333 München (DE)
(72) Erfinder: Hadt, Alexander, Dipl.-Ing., 59174 Kamen (DE); Beckers, Michael, 46395 Bocholt (DE); Bartsch, Ulrich, Dipl.-Ing., 46244 Bottrop (DE); Rüther, Ralf, Dipl.-Ing., 48653 Coesfeld (DE)

(57) **Zusammenfassung**

Um in einem von einer Basisstation zur Erzeugung von Tönen aufgeforderten Mobilteil eines drahtlosen Telekommunikationssystems den Ton/die Töne in einer das menschliche Gehör schonenden Lautstärke zu erzeugen, wird/werden der Ton/die Töne nur in solchen Situationen in voller Lautstärke abgegeben, in denen man davon ausgehen kann, daß
(i) der Telefonbenutzer das Mobilteil noch weit genug von seinem Ohr entfernt hält und
(ii) keine negative Beeinflussung des Gehörs auftreten kann.
In der Regel wird das der Fall sein, wenn der Benutzer nicht selber telefoniert oder nicht versucht, eine Verbindung zu einem anderen Teilnehmer herzustellen.

## Beschreibung

Die Erfindung betrifft ein Verfahren zum Erzeugen von Tönen in einem drahtlosen Telekommunikationssystem gemäß dem Oberbegriff des Patentanspruches 1 und eine Anordnung zum Erzeugen von Tönen in einem drahtlosen Telekommunikationssystem gemäß dem Oberbegriff des Patentanspruches 8.

Drahtlose Telekommunikationssysteme der vorstehend bezeichneten Art sind Nachrichtensysteme mit einer Fernübertragungsstrecke zwischen einer Nachrichtenquelle und einer Nachrichtensenke zur Nachrichtenverarbeitung und Nachrichtenübertragung, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtlos - z. B. nach diversen Funkstandards wie DECT, GSM, WACS oder PACS, IS-54, PHS, PDC etc. - ist (vgl. IEEE Communications Magazine, January 1995, Seiten 50 bis 57; D.D. Falconer et al: 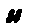 Time Division Multiple Access Methods for Wireless Personal Communications 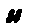 ).

"Nachricht" ist ein übergeordneter Begriff, der sowohl für den Sinngehalt (Information) als auch für die physikalische Repräsentation (Signal) steht. Signale können dabei z. B.
(1) Bilder
(2) gesprochene Wörter
(3) geschriebene Wörter
(4) verschlüsselte Wörter oder Bilder
repräsentieren.

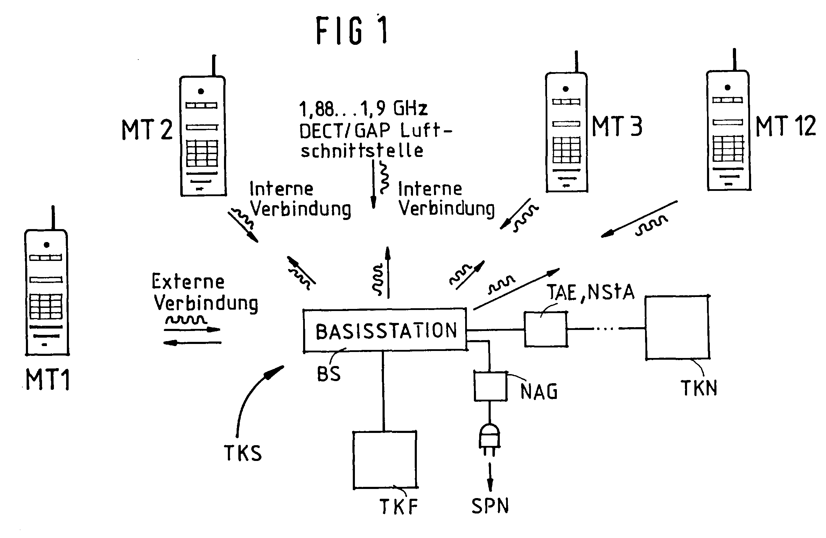

FIGUR 1 zeigt stellvertretend für die Vielzahl der drahtlosen Telekommunikationssysteme ein DECT/GAP-System, bei dem gemäß dem DECT/GAP-Standard (**D**igital **E**uropean **C**ordless **T**elecommunication; vgl. **(1)**: Nachrichtentechnik Elektronik 42 (1992) Jan./Feb. Nr. 1, Berlin, DE; U. Pilger 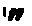 Struktur des DECT-Standards 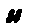 , Seiten 23 bis 29 **in Verbindung mit** der ETSI-Publikation ETS 300175-1...9, Okt. 1992; **(2):** Telcom Report 16 (1993), Nr. 1, J. H. Koch: 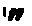 Digitaler Komfort für schnurlose Telekommunikation - DECT-Standard eröffnet neue Nutzungsgebiete 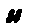 , Seiten 26 und 27; **(3):** tec 2/93 - Das technische Magazin von Ascom 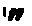 Wege zur universellen mobilen Telekommunikation 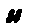 , Seiten 35 bis 42; Generic Access Profile; vgl. ETSI-Publikation prETS 300444, April 1995, Final Draft, ETSI, FR) an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl 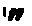 k 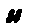 von für den Duplexbetrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z. B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. Telcom Report 16, 1993, Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. Telcom Report 16, 1993, Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12 anstelle des Telekommunikationsendgerätes TKE den zweiten Anschluß für eine externe Verbindung nutzt. Die Mobilteile MT1...MT12 werden gemäß der nachveröffentlichten deutschen Patentanmeldung 195 45 762.5 im Handbetrieb (Normalbetrieb) mit einer Batterie oder einem Akkumulator und im Freisprechbetrieb in Verbindung mit einer an ein Spannungsnetz SPN angeschlossenen Ladestation betrieben. Die als schnurlose Klein-Vermittlungsanlage ausgebildete Basisstation wird über ein Netzanschlußgerät NAG an das Spannungsnetz SPN angeschlossen.

FIGUR 2 zeigt ausgehend von der Druckschrift Components 31 (1993), Heft 6, Seiten 215 bis 218; S. Althammer, D. Brückmann: 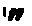 Hochoptimierte IC's für DECT-Schnurlostelefone 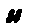 den prinzipiellen Schaltungsaufbau der Basisstation BS und des Mobilteils MT. Die Basisstation BS und das Mobilteil weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist unter anderem eine Codier-/Decodiereinrichtung CODEC enthalten. Die Zentrale Steuerung ZST weist sowohl für die Basisstation BS als auch für das Mobilteil MT einen Mikroprozessor µP mit einem nach dem OSI/ISO-Schichtenmodell (vgl. **(1):** Unterrichtsblätter - Deutsche Telekom Jg.48, 2/1995, Seiten 102 bis 111; **(2):** ETSI-Publikation ETS 300175-1...9, Okt. 1992) aufgebauten Programmmodul PGM, ein Signalsteuerungsteil SST und einen digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten drei Schichten (Schicht-1...Schicht-3) sowie eine vierte als IWU-Schicht (**I**nter**W**orking **U**nit) bezeichnete Schicht-4 dargestellt. Das Signalsteuerungsteil SST ist in der Basisstation BS als **T**ime **S**witch **C**ontroller TSC und in dem Mobilteil MT als **B**urst **M**ode **C**ontroller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt. Der Mikroprozessor µP ist - gemäß der eingangs angegebenen Definition - Bestandteil eines Mikroprozessorsystems.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

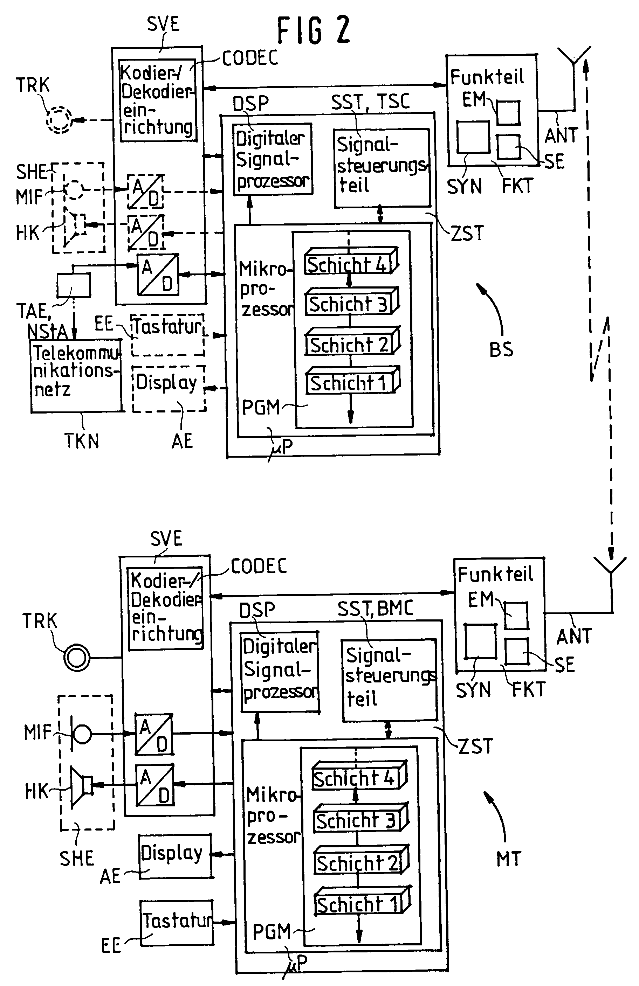

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z. B. aus einer als Tastatur ausgebildeten Eingabeeinrichtung EE, einer als Display ausgebildeten Anzeigeeinrichtung AE, eine als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

Nach dem GAP-Standard, der eine Übereinkunft verschiedener Hersteller von DECT-Systemen zwecks gemeinsamer Nutzung von Mobilteilen und Basisstationen darstellt, kann den Mobilteilen, die ordnungsgemäß an GAP-Basisstationen bekannt gemacht - d. h. z. B. gemäß der WO 94/10785 (vgl. Patentanspruch 1 und FIGUR 4 der WO 94/10785) angemeldet und registriert - worden sind, abhängig von ihrer aktuellen Betriebssituation eine Aufforderung zur Signalisierung eines Tones (z. B. eines Alarmtones) gestellt werden. Es wurde dabei jedoch nicht beachtet, daß Töne in bestimmten Situationen eher als schädlich denn als sinnvoll angesehen werden können.

Mobilteile eines drahtlosen Telekommunikationssystems (z. B. des DECT/GAP-Systems) sind in der Regel so ausgelegt, daß die Tonerzeugung, anders als normalerweise bei schnurgebundenen Geräten, im Hörer stattfindet. Dies kann Schädigungen des Gehörs des Telefonbenutzers mit ggf. daraus entstehenden Regreßansprüchen zur Folge haben. Eine Schädigung kann insbesondere dann auftreten, wenn der Benutzer z. B. die Tonsignalisierung des Mobilteils auf maximale Lautstärke eingestellt hat, weil das entsprechende Mobilteil im Einzugsgebiet einer Basisstation abgelegt wird und der Benutzer gerade ein Gespräch führt (Freisprechbetrieb des Mobilteils; vgl. nachveröffentlichte deutsche Patentanmeldung 195 45 762.5) bzw. erwartet, und das auf maximale Lautstärke eingestellte Mobilteil an sein Ohr hält. Wird das Mobilteil in diesem Zustand von der Basisstation aufgefordert, eine Tonsequenz (Melodie) abzugeben, so wird diese Tonsequenz beim Folgen der Aufforderung in voller Lautstärke ertönen.

Die vorstehend beschriebene Problematik entsteht folglich nur bei Aufforderung zur Tonsignalisierung durch die Basisstation. Wird die Erzeugung einer Tonsequenz (Melodie) vom Mobilteil selber veranlaßt, handelt es sich dabei grundsätzlich um eine vom Benutzer provozierte Tonerzeugung. Hierbei ist er für den Schutz seines Gehörs selbst verantwortlich.

Bisher sind diese Probleme in der Praxis nicht aufgetreten, weil die Hersteller diese Situationen schon bei der Entwicklung der eigenen Basis berücksichtigt haben, indem eine Tonerzeugung in gewissen Zuständen des Mobilteils vermieden wurde. Dies ist jedoch bei den (zukünftigen) DECT/GAP-Geräten nicht mehr der Fall.

Die der Erfindung zugrundeliegende Aufgabe besteht darin, daß in einem drahtlosen Telekommunikationssystem ein von einer Basisstation zur Tonerzeugung aufgefordertes Mobilteil den Ton/die Töne in einer das menschliche Gehör schonenden Lautstärke erzeugt.

Diese Aufgabe wird ausgehend
1) von dem in dem Oberbegriff des Patentanspruches 1 definierten Verfahren durch die im Kennzeichen des Patentanspruches 1 angegebenen Merkmale und
2) von der in dem Oberbegriff des Patentanspruches 8 definierten Anordnung durch die im Kennzeichen des Patentanspruches 8 angegebenen Merkmale gelöst.

Die der Erfindung zugrundeliegende Idee besteht darin, daß ausgehend von den in der Beschreibungseinleitung angegebenen/definierten drahtlosen Telekommunikationsystemen - auf Veranlassung einer Basisstation des Telekommunikationsystems - nur in solchen Situationen an einem Mobilteil des Telekommunikationsystems ein Ton/Töne (Melodie, Tonsequenz) in voller Lautstärke abgegeben wird/werden, in denen man davon ausgehen kann, daß
(i) der Telefonbenutzer das Mobilteil noch weit genug von seinem Ohr entfernt hält und
(ii) keine negative Beeinflussung des Gehörs auftreten kann.

In der Regel wird das der Fall sein, wenn der Benutzer nicht selber telefoniert oder nicht versucht, eine Verbindung zu einem anderen Teilnehmer herzustellen.

Will der Anwender hingegen die Toncharakteristika einstellen, ist er natürlich selbst für den Schutz seines Ohres verantwortlich und sollte für einen hinreichend großen Abstand zwischen Mobilteil und Gehör sorgen.

Befindet sich z. B. ein DECT/GAP- Mobilteil eines DECT/GAP-Systems in den im folgenden aufgeführten Zuständen, die nach dem GAP-Standard möglich sind und erhält das Mobilteil über Funk die Aufforderung von der Basisstation, einen Ton zu erzeugen, so wird dieser nur mit minimaler Lautstärke eingeschaltet:
Zustand 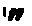 Active 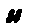
Zustand 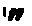 Overlap_Sending 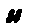
Zustand 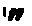 Call_Delivered 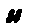
Zustand 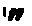 Call_Proceeding 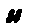
Zustand 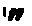 Call_Initiated 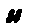

Man erhält somit eine signal- und zustandsabhängige Tongenerierung.

Weitere vorteilhafte Weiterbildungen der Erfindung sind in den Unteransprüchen angegeben.

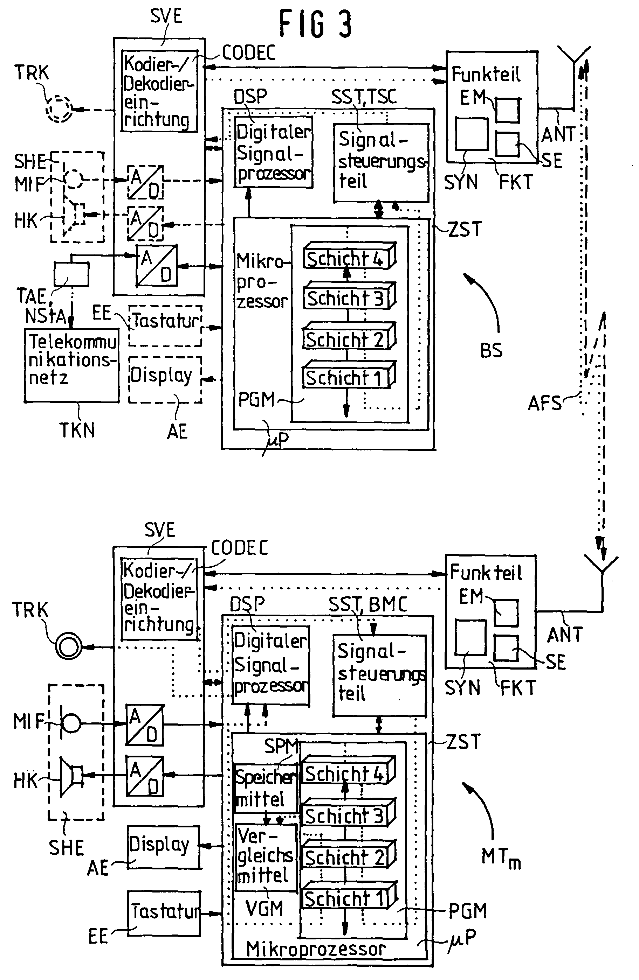

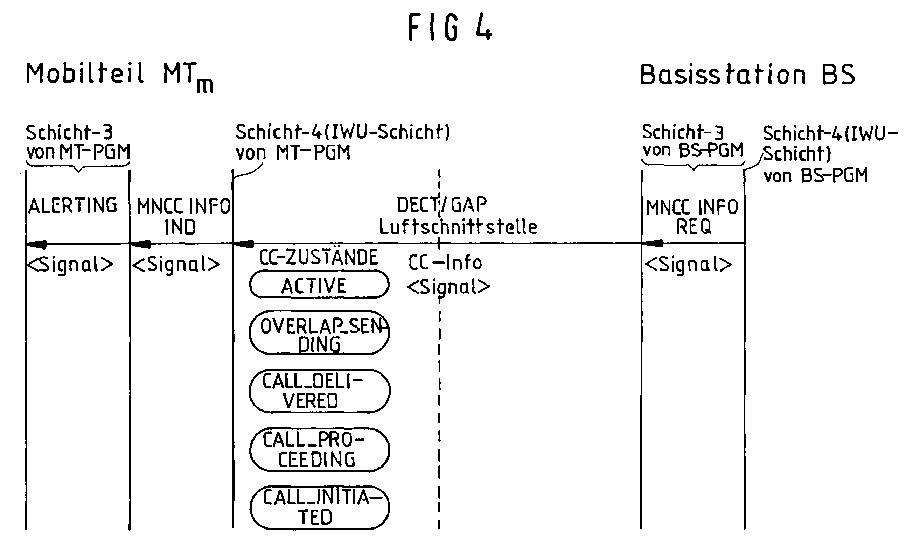

Ein Ausführungsbeispiel der Erfindung wird anhand der FIGUREN 3 und 4 erläutert. Es zeigen:
FIGUR 3 ausgehend von dem bekannten DECT/GAP-System nach
FIGUR 2 ein modifiziertes DECT/GAP-System,
FIGUR 4 ein Zustands-Anreiz-Diagramm für das modifizierte DECT/GAP-System nach FIGUR 3.

FIGUR 3 zeigt ausgehend von dem bekannten DECT/GAP-System nach FIGUR 2 ein modifiziertes DECT/GAP-System, das ein gegenüber dem DECT/GAP-Mobilteil MT modifiziertes Mobilteil MTₘ aufweist. Im Rahmen der DECT/GAP-spezifischen Telekommunikationsverbindung zwischen der Basisstation BS und dem Mobilteil MTₘ kann das Mobilteil MTₘ - wie eingangs (in der Beschreibungseinleitung) erwähnt - unabhängig von Zuständen der Telekommunikationsverbindung zur Tonsignalisierung durch ein drahtlos übertragenes Aufforderungssignal AFS aufgefordert werden. Damit nach einer solchen Aufforderung durch die Basissstation BS die lautstärkebezogene Signalisierung des Tones/der Töne aufgrund der eingangs angesprochenen Problematik an mobilteilspezifische Betriebszustände angepaßt wird, weist das modifizierte Mobilteil MTₘ im Unterschied zum bekannten Mobilteil MT nach FIGUR 2 in der Zentralen Steuerung ZST Speichermittel SPM und Vergleichsmittel VGM auf, die in der dargestellten Weise einander zugeordnet sind und die innerhalb der Zentralen Steuerung ZST vorzugsweise in Form eines Programms realisiert sind. Das Vergleichsmittel VGM ist darüber hinaus im Rahmen der basissstationsgesteuerten Tonsignalisierung dem Programmmodul PGM in der dargestellten Weise zugeordnet.

Die in der Basissstation BS bei der Erzeugung des Aufforderungssignals AFS und die in dem Mobilteil MTₘ bei der Verarbeitung des Aufforderungssignals AFS beteiligten Funktionseinheiten sind in FIGUR 3 durch punktierte Wirkungslinien miteinander verbunden.

FIGUR 4 zeigt ein Zustands-Anreiz-Diagramm für das modifizierte DECT/GAP-System nach FIGUR 3, anhand dessen die Erzeugung des Aufforderungssignals AFS in der Basissstation BS und die Verarbeitung des Aufforderungssignals AFS in dem Mobilteil MTₘ erläutert wird.

Ausgangspunkt für die Erzeugung des Aufforderungssignals AFS in der Basissstation BS ist das Programmmodul PGM der Basisstation BS, das im folgenden als Unterscheidungskriterium zum Programmmodul PGM des Mobilteils MTₘ als basisstationsspezifisches Programmmodul BS-PGM bezeichnet wird, und in diesem Modul die nach dem ISO/OSI-Schichtenmodell als Vermittlungsschicht bezeichnete Schicht-3. Diese Schicht-3 erhält gemäß dem DECT-Standard (vgl. ETSI-Publikation ETS 300 175-5, Okt. 1992, Kap. 16 und 16.3.2.9) ein von der Schicht-4 (IWU-Schicht) des basisstationsspezifischen Programmmoduls BS-PGM gesendetes erstes Datenelement 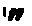 MNCC-INFO-REQ 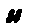 . Dieses Datenelement beinhaltet eine Anforderung an eine CC-Funktionsgruppe (**C**all **C**ontrol) - vgl. ETSI-Publikation ETS 300 175-5, Okt. 1992, Seite 29, FIGUR 1 - innerhalb der Schicht-3 eine CC-Meldung vom Meldungstyp 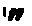 CC-INFO 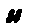 mit dem Meldungsinhalt 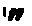 Tonsignalisierung 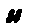 über die DECT/GAP-Luftschnittstelle mittels des Aufforderungssignals AFS an das Mobilteil MTₘ zu senden. Dies entspricht in FIGUR 3 dem Verlauf der punktierten Wirkungslinien in der Basisstation BS.

In dem Mobilteil MTₘ wird das Aufforderungssignal AFS empfangen. Danach erhält die Schicht-3 des mobilteilspezifischen Programmmoduls MT-PGM ein von der Schicht-4 (IWU-Schicht) des mobilteilspezifischen Programmmoduls MT-PGM gesendetes zweites Datenelement 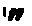 MNCC-INFO-IND 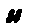 . Dieses Datenelement beinhaltet eine Anforderung an die CC-Funktionsgruppe (**C**all **C**ontrol) - vgl. ETSI-Publikation ETS 300 175-5, Okt. 1992, Seite 29, FIGUR 1 - innerhalb der Schicht-3 des mobilteilspezifischen Programmmoduls MT-PGM den mit der CC-Meldung übertragene Meldungsinhalt auszuwerten. Dies entspricht in FIGUR 3 dem Verlauf der punktierten Wirkungslinien in dem Mobilteil Mtₘ. Zu dem Auswertezeitpunkt kann sich das Mobilteil MTₘ nach dem DECT-Standard (vgl. ETSI-Publikation ETS 300 175-5, Okt. 1992, Kap. 9) bezüglich der Schicht-3 mit der CC-Funktionsgruppe in verschiedenen CC-Zuständen (Betriebszustände des Mobilteils) befinden. Diese CC-Zustände werden als IST-Zustände bezeichnet. Der Meldunginhalt 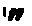 Tonsignalisierung 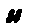 wird deshalb in Abhängigkeit von diesen CC-Zuständen (IST-Zuständen) ausgewertet. Die Auswertung sieht dabei so aus, daß der Meldungsinhalt nur dann weiterverarbeitet wird - d. h. die von der Basisstation BS geforderte Tonsignalisierung veranlaßt wird, wenn die Tonsignalisierung sich mit den CC-Zuständen (IST-Zuständen) des Mobilteils MTₘ verträgt. Diese Verträglichkeit wird in den Vergleichsmitteln VGM überprüft. Für diese Überprüfung werden in den Speichermitteln SPM gespeicherte als SOLL-Zustände vorgegebene CC-Zustände mit den IST-Zuständen verglichen. Diese SOLL-Zustände sind die Zustände 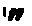 ACTIVE 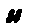 , 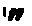 OVERLAP_SENDING 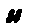 , 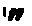 CALL_DELIVERED 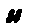 , 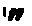 CALL_PROCEEDING 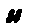 und 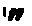 CALL_INITIATED 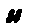 (vgl. ETSI-Publikation ETS 300 175-5, Okt. 1992, Kap. 9.2.1.3, 9.2.1.5, 9.2.1.7, 9.2.1.6, 9.2.1.4).

Bei einem positiven Vergleich, d. h. bei Zustandsübereinstimmung, wird ein drittes Datenelement 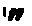 Alerting 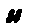 (vgl. ETSI-Publikation prETS 300444, April 1995, Final Draft, Kap. 8.14) erzeugt/freigesetzt, das eine Anforderung zur Generierung eines Tones/einer Tonfolge (Tonsequenz) mit reduzierter Lautstärke beinhaltet.

Anderenfalls (negativer Vergleich, d. h. keine Zustandsübereinstimmung) wird ein viertes Datenelement 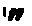 Alerting 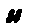 (vgl. ETSI-Publikation prETS 300444, April 1995, Final Draft, Kap. 8.14) erzeugt/freigesetzt, das eine Anforderung zur Generierung eines Tones/einer Tonfolge (Tonsequenz) mit normaler - d. h. mit der am Mobilteil eingestellten, also nicht reduzierten, Lautstärke beinhaltet.

Aufgrund dieser beiden Anforderungen wird von dem Mikroprozessor µP über den Digitalen Signalprozessor DSP in der Zentralen Steuerung ZST des Mobilteils MTₘ die Tonrufklingel TRK zur Abgabe des Tones/der Töne mit der jeweiligen Lautstärke angesteuert.

## Patentansprüche

**1.** Verfahren zum Erzeugen von Tönen in einem drahtlosen Telekommunikationssystem, bei dem
a) ein Mobilteil (MTₘ) eine Telekommunikationsverbindung zu einer Basisstation (BS) des Telekommunikationssystems unterhält,
b) das Mobilteil (MTₘ) in Abhängigkeit von Verbindungszuständen der Telekommunikationsverbindung Betriebszustände einnehmen kann,
c) das Mobilteil (MTₘ) von der Basisstation (BS) durch ein Aufforderungssignal (AFS) zur Tonerzeugung aufgefordert wird,
**dadurch gekennzeichnet,** daß
beim Übertragen des Aufforderungssignals (AFS) in ersten Betriebszuständen der Betriebszustände des Mobilteils (MTₘ), in denen das Gehör dem erzeugten Ton/den erzeugten Tönen ausgesetzt sein würde, die Lautstärke des Tones/der Töne auf das Gehör schonende Werte reduziert wird.

**2.** Verfahren nach Anspruch 1, **dadurch gekennzeichnet,** daß die ersten Betriebszustände 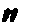 Schicht 3-Zustände 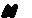 sind, die von einem Programmodul (PGM, MT-PGM) des Mobilteils (MTₘ) einnehmbar sind.

**3.** Verfahren nach Anspruch 2, **gekennzeichnet** durch die 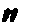 Schicht 3-Zustände 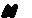 *"*Active*"*,*"*Overlap_Sending*"*, *"*Call_Delivered*"*, *"*Call_Proceeding*"* oder *"*Call_Initiated*"*.

**4.** Verfahren nach einem der Ansprüche 1 bis 3, **dadurch gekennzeichnet,** daß das drahtlose Telekommunikationssystem ein Schnurlos-Telekommunikationssystem ist, das Mobilteil (MTₘ) ein Schnurlos-Handapparat ist und die Basisstation (BS) eine Schnurlos-Basisstation ist.

**5.** Verfahren nach Anspruch 4, **dadurch gekennzeichnet,** daß das Schnurlos-Telekommunikationssystem, der Schnurlos-Handapparat und die Schnurlos-Basisstation nach dem DECT/GAP-Standard funktionieren.

**6.** Verfahren nach einem der Ansprüche 1 bis 3, **dadurch gekennzeichnet,** daß das drahtlose Telekommunikationssystem ein Mobilfunk-Telekommunikationssystem ist, das Mobilteil (MTₘ) ein Mobilfunk-Handapparat ist und die Basisstation (BS) eine Mobilfunk-Basisstation ist.

**7.** Verfahren nach Anspruch 6, **dadurch gekennzeichnet,** daß das Mobilfunk-Telekommunikationssystem, der Mobilfunk-Handapparat und die Mobilfunk-Basisstation nach dem GSM-Standard funktionieren.

**8.** Anordnung zum Erzeugen von Tönen in einem drahtlosen Telekommunikationssystem,
a) die ein Mobilteil (MTₘ) und eine Basisstation (BS) aufweist, die zum Zweck der Telekommunikation in dem Telekommunikationssystems verbunden sind,
b) bei der das Mobilteil (MTₘ) derart ausgebildet ist, daß es in Abhängigkeit von Verbindungszuständen der Telekommunikationsverbindung Betriebszustände einnehmen kann,
c) bei der die Basisstation (BS) ein Aufforderungssignal (AFS) generiert, mit dem sie das Mobilteil (MTₘ) zur Tonerzeugung auffordert,
**dadurch gekennzeichnet,** daß
das Mobilteil (MTₘ) mehrere Mittel (µP, PGM, MT-PGM, VGM, SPM, DSP, TRK) zur Tonerzeugung aufweist, die beim Übertragen des Aufforderungssignals (AFS) derart ausgebildet und miteinander verbunden sind, daß in ersten Betriebszuständen der Betriebszustände des Mobilteils (MTₘ), in denen das Gehör dem erzeugten Ton/den erzeugten Tönen ausgesetzt sein würde, die Lautstärke des Tones/der Töne auf das Gehör schonende Werte reduziert wird.

**9.** Anordnung nach Anspruch 8, **dadurch gekennzeichnet,** daß die Tonerzeugungsmittel (µP, PGM, MT-PGM, VGM, SPM, DSP, TRK) eine Steuereinrichtung (µP) mit einem Programmodul (PGM, MT-PGM), einem Speichermodul (SPM) und einem Vergleichsmodul (VGM), eine Einrichtung zum Generieren von Tonsignalen (DSP) und einen elektro-akustischen Wandler (TRK) aufweisen, wobei die Steuereinrichtung (µP) in Abhängigkeit von dem Aufforderungssignal (AFS) und den ersten Betriebszuständen des Mobilteils (MTₘ) die Einrichtung zum Generieren des in bezug auf die Lautstärke reduzierten Tonsignals/der in bezug auf die Lautstärke reduzierten Tonsignale (DSP) steuert, das/die von dem elektro-akustischen Wandler (TRK) in den entsprechenden Ton/die entsprechenden Töne umgewandelt werden.

**10.** Anordnung nach Anspruch 9, **dadurch gekennzeichnet,** daß die ersten Betriebszustände 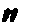 Schicht 3-Zustände 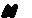 sind, die von dem Programmodul des Mobilteils (MTₘ) einnehmbar sind.

**11.** Anordnung nach Anspruch 10, **gekennzeichnet** durch die 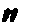 Schicht 3-Zustände 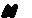 *"*Active*"*, *"*Overlap_Sending*"*, *"*Call_Delivered*"*, *"*Call_Proceeding*"* oder *"*Call_Initiated*"*.

**13.** Anordnung nach einem der Ansprüche 8 bis 12, **dadurch gekennzeichnet,** daß das drahtlose Telekommunikationssystem ein Schnurlos-Telekommunikationssystem ist, das Mobilteil (MTₘ) ein Schnurlos-Handapparat ist und die Basisstation (BS) eine Schnurlos-Basisstation ist.

**14.** Anordnung nach Anspruch 13, **dadurch gekennzeichnet,** daß das Schnurlos-Telekommunikationssystem, der Schnurlos-Handapparat und die Schnurlos-Basisstation nach dem DECT/GAP-Standard funktionieren.

**15.** Anordnung nach einem der Ansprüche 8 bis 12, **dadurch gekennzeichnet,** daß das drahtlose Telekommunikationssystem ein Mobilfunk-Telekommunikationssystem ist, das Mobilteil (MTₘ) ein Mobilfunk-Handapparat ist und die Basisstation (BS) eine Mobilfunk-Basisstation ist.

**16.** Anordnung nach Anspruch 15, **dadurch gekennzeichnet,** daß das Mobilfunk-Telekommunikationssystem, der Mobilfunk-Handapparat und die Mobilfunk-Basisstation nach dem GSM-Standard funktionieren.
